# EUROPEAN PATENT APPLICATION

(11) **EP 3 700 200 A1**
(43) Date of publication of application: **26.08.2020**
(21) Application number: 19749169.9
(22) Date of filing: 07.03.2019
(51) Int. Cl.: H04N 7/18

(54) **CAMERA LINKAGE METHOD AND COMPUTER STORAGE MEDIUM**

(30) Priority: 07.01.2019 CN 201910010971; 07.01.2019 CN 201910010983
(71) Applicant: Gosuncn Technology Group Co., Ltd., Guangzhou City, Guangdong 510670 (CN)
(72) Inventor: The designation of the inventor has not yet been filed
(74) Representative: Meyer, Thorsten
(86) International application number: PCT/CN2019/077254
(87) International publication number: WO 2020/143110

(57) **Abstract**

The present invention provides a camera link method and a computer storage medium. The method includes acquiring a real-time video of a camera, selecting a point in the real-time video as a linked point and acquiring coordinates of the linked point; designating a linked camera; and acquiring a real-time video of the linked camera, and turning on the real-time video of the linked camera or positioning the linked camera to the linked point. According to the camera link method and the computer storage medium of the present invention, linkage among multiple cameras, and automatically linkage to multiple dome cameras can be achieved, and the application range is wide.

## Description

### FIELD OF THE INVENTION

The present invention relates to a field of camera link, and in particular to a camera link method and a computer storage medium.

### BACKGROUND OF THE INVENTION

At present, there are two main solutions for the linkage between a gun camera and a dome camera. One is that one gun camera is linked to one dome camera, and the gun camera is an all-in-one camera; the other is that one gun camera is linked to multiple dome cameras. In the second one, it's necessary to set the configuration of linking the dome camera to the required area in advance, and the screen of the dome camera will not automatically turn to the linked position.

The two commonly used solutions have the following disadvantages:

First, it must be an all-in-one camera to achieve camera link, such as a gun-dome linking camera, or a panorama linking camera, which has a narrow application range;

Second, it can't be achieved to automatically link multiple cameras. It must set the configuration of linking the cameras, but the screen can't be linked to the linked position.

Therefore, there is a need for improvement.

### SUMMARY OF THE INVENTION

In view of the above deficiencies, the present invention provides a camera link method and a computer storage medium, which achieves linkage among multiple cameras, and automatically links multiple dome cameras.

To solve the above problem, as an aspect of the present invention, a camera link method includes:
acquiring a real-time video of a camera, selecting a point in the real-time video as a linked point and acquiring coordinates of the linked point;
designating a linked camera; and
acquiring a real-time video of the linked camera, and turning on the real-time video of the linked camera or positioning the linked camera to the linked point.

According to some embodiments of the present invention, the step of acquiring a real-time video of a camera, selecting a point in the real-time video as a linked point and acquiring coordinates of the linked point comprises:
acquiring the real-time video of the camera through a video monitoring platform
clicking a point of the real-time video of the camera with a mouse as the linked point, and acquiring GPS coordinates of the point.

According to some embodiments of the present invention, step of acquiring coordinates of the linked point comprises:
acquiring XY coordinates of a screen of the real-time video of the camera;
converting the XY coordinates to PT coordinates;
converting the PT coordinates to GPS coordinates and acquiring the GPS coordinates of the point that the mouse clicks.

According to some embodiments of the present invention, the method further includes acquiring the designated linked camera by a backend database.

According to some embodiments of the present invention, the step of acquiring a real-time video of the linked camera, and turning on the real-time video of the linked camera or positioning the linked camera to the linked point comprises:
acquiring the real-time video of the linked camera through a video monitoring platform;
turning on the real-time video of the linked camera if the linked camera is a gun camera or a dome camera.

According to some embodiments of the present invention, the step of acquiring a real-time video of the linked camera, turning on the real-time video of the linked camera or positioning the linked camera to the linked point comprises:
acquiring a real-time video of the linked camera through a video monitoring platform; and
acquiring GPS coordinates of the linked camera, converting the GPS coordinates to PT coordinates to acquire the PT coordinates, and positioning the linked camera to the linked point, if the linked camera is an AR dome camera.

According to some embodiments of the present invention, the method further includes zooming and stretching a focal length to precisely position the camera, according to a visual distance between the AR dome camera and a target point, and a type of the AR dome camera.

As a second aspect of the present invention, a camera link device comprises:
a video monitoring platform, configured to acquire a real-time video of a camera;
a coordinate acquiring module, configured to acquire coordinates of a linked point after a point is selected as the linked point from the real-time video;
a backend database, configured to acquire a linked camera that is designated;
an identify module, configured to identify a type of the linked camera; and
a data processing module, configured to turn on the real-time video of the linked camera or position the linked camera to the linked point according to the type of the linked camera that is identified by the indentify module.

As a third aspect of the present invention, a camera link system comprises several cameras and controllers, and the controllers are configured to:
acquire a real-time video of a camera, select a point in the real-time video as a linked point and acquire coordinates of the linked point;
designate a linked camera; and
acquire a real-time video of the linked camera, turn on the real-time video of the linked camera or position the linked camera to the linked point.

The above technical solution has the following advantages at least:

According to the camera link method and the computer storage medium of the present invention, linkage among multiple cameras, and automatically linkage to multiple dome cameras can be achieved.

### BRIEF DESCRIPTION OF THE DRAWINGS

Fig. 1 is a flow chart of a camera link method according to an embodiment of the present invention;
Fig. 2 is a schematic diagram of a camera link device according to an embodiment of the present invention;
Fig. 3 is schematic diagram of an electronic device according to an embodiment of the present invention; and
Fig. 4 is a schematic diagram of a camera link system according to an embodiment of the present invention.

### Reference numerals:

camera link method 100;
camera link device 200; video monitoring platform 210; coordinate acquisition module 220; background database 230; identification module 240; data processing module 250; search module 260; positioning module 270;
electronic device 300;
memory 310; operating system 311; application programs 312;
processor 320; network interface 330; input device 340; hard disk 350; and display device 360.

### DETAILED DESCRIPTION OF ILLUSTRATED EMBODIMENTS

Specific embodiments of the present invention will be further described in detail below with reference to the drawings and embodiments. The following embodiments are intended to illustrate the invention but are not intended to limit the scope of the invention.

The camera link method 100 according to an embodiment of the present invention will be specifically described below with reference to the accompanying drawings.

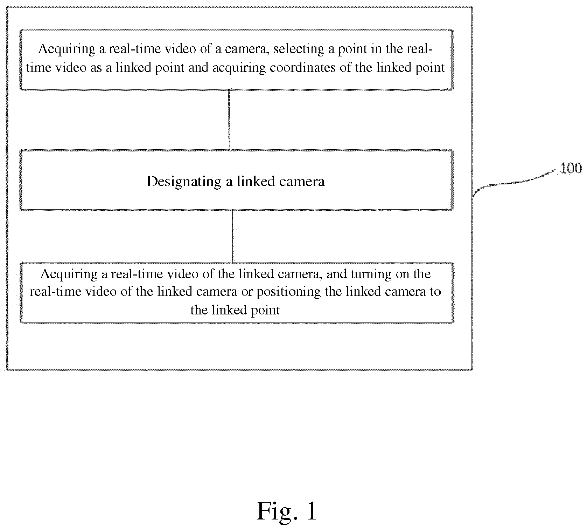

As illustrated in Fig. 1, the camera link method 100 according to an embodiment of the present invention includes:
acquiring a real-time video of a camera, selecting a point in the real-time video as a linked point and acquiring coordinates of the linked point;
designating a linked camera; and
acquiring a real-time video of the linked camera, and turning on the real-time video of the linked camera or positioning the linked camera to the linked point.

That is, in the camera link method 100 of the present invention, firstly, a real-time video of a certain camera is acquired, a certain point in the real-time video is selected as a linked point, and the coordinates of this linked point are obtained; then, a desired linked camera is designated, and a real-time video of the linked camera is acquired; finally it's selective to turn on the real-time video of the linked camera or position the linked camera to the linked point, according to the type of the linked camera.

Therefore, according to the camera link method of the present invention, any one camera can be linked with a designated camera, and it's selective to turn on the real-time video of the linked camera or position the linked camera to the linked point, depending on the type of the linked camera, so as to achieve the linking between different types of cameras. This method is simple and practicable, and the application range is wide.

According to one embodiment of the present invention, the steps of acquiring a real-time video of a camera, selecting a point in the real-time video as a linked point and acquiring coordinates of the linked point includes:
acquiring the real-time video of the camera by a video monitoring platform; and
clicking a point of the real-time video of the camera with a mouse as the linked point, and acquiring GPS coordinates of the point.

That is, the operation of acquiring the real-time video of the camera may be achieved by a video monitoring platform, and the operation of selecting the certain point on the real-time video may be achieved by clicking on the real-time video by a mouse, thereby the GPS coordinates of the point can be obtained. The implementation method is simple and precise on acquiring the coordinates.

In some embodiments of the present invention, the manner of acquiring the coordinates of the linked point includes:
acquiring XY coordinates of the screen of the real-time video;
calling an algorithm of converting the XY coordinates to PT coordinates to obtain PT coordinates; wherein, the PT coordinates are abbreviations of pan-tilt coordinates, which represent the lateral angle and the elevation angle of the camera; and
calling another algorithm of converting the PT coordinates to GPS coordinates to obtain GPS coordinates of the point that the mouse clicks.

That is, according to the camera link method 100 of the present invention, the real-time video of a camera can be acquired through a video monitoring platform, when the mouse clicks a certain point of the real-time video, the XY coordinates of the screen can be acquired by programs, and the algorithm for converting XY coordinates to PT coordinates is called so as to acquire PT coordinates, finally the algorithm for converting PT coordinates to GPS coordinates is called to acquire GPS coordinates. In such a way, the GPS coordinates of the click point of the mouse in the video can be obtained quickly.

Preferably, according to an embodiment of the present invention, the designated linked camera can be obtained through a backend database. In other words, the information of plurality of cameras can be pre-stored in the backend database. When there is a need to start up a certain camera, it's easy to process the backend database.

In some embodiments of the present invention, the step of acquiring a real-time video of the linked camera, turning on the real-time video of the linked camera or positioning the linked camera to the linked point includes:
acquiring the real-time video of the linked camera by a video monitoring platform; and
turning on the real-time video of the linked camera if the linked camera is a gun camera or a dome camera.

That is, the real-time video of the linked camera can be acquired through a video monitoring platform. If the linked camera is a gun camera or a dome camera, the real-time video of the linked camera can be turned on directly to achieve the linking between the camera and the linked camera.

It should be noted that the video monitoring platform in the present disclosure may be a software module or a hardware component configured to monitor real-time video of each camera.

In some embodiments of the present invention, the step of the step of acquiring a real-time video of the linked camera, turning on the real-time video of the linked camera or positioning the linked camera to the linked point further includes:
acquiring a real-time video of the linked camera by a video monitoring platform; and
acquiring GPS coordinates of the linked camera, converting the GPS coordinates to PT coordinates to acquire the PT coordinates, and positioning the linked camera to the linked point by means of the PT coordinates, if the linked camera is an AR (Augmented Reality) dome camera

In the present embodiment, the real-time video of the linked camera also can be obtained by the video monitoring platform, but the difference is that, if the linked camera is an AR dome camera, based on the GPS coordinates acquired by the linked camera, the algorithm of converting the GPS coordinates to PT coordinates is called to acquire the PT coordinates of the linked camera, and then the linked camera can be positioned to the lined point by means of the PT coordinates.

That is, the camera link method 100 of the present invention is applicable to the linking between a camera and a gun camera, or an ordinary dome camera, or an AR dome camera. Namely, one or more cameras can be linked, including ordinary gun cameras, panoramic cameras, ordinary dome cameras, or AR dome cameras.

Preferably, according to one embodiment of the present invention, the camera link method 100 further includes:
searching a surrounding camera around the linked camera, and acquiring a real-time video of the surrounding camera or positioning the surrounding camera to the linked point.

In other words, after the camera is linked with the linked camera, the surrounding cameras around the linked camera can be searched out, so as to link the surrounding cameras or position them to the linked point.

Specifically, the step of searching a surrounding camera around the linked camera, and acquiring a real-time video of the surrounding camera or positioning the surrounding camera to the linked point, includes:
automatically searching the surrounding camera around the linked camera by GPS coordinates;
acquiring the real-time video of the linked camera through the video monitoring platform, if the surrounding camera is a gun camera or an ordinary dome camera; and
acquiring GPS coordinates of the linked camera, converting the GPS coordinates to PT coordinates to acquire the PT coordinates, and positioning the linked camera to the linked point, if the linked camera is an AR dome camera.

That is, the way of searching the surrounding cameras can be achieved by automatically searching by means of GPS coordinates. If the surrounding camera is a gun camera or a dome camera, a real-time video of the surrounding camera can be acquired through a video monitoring platform.

If the surrounding camera is an AR dome camera, the PT coordinates of the surrounding camera can be acquired by calling an algorithm, and then the surrounding camera can be positioned to the linked point.

Further, the camera link method 100 includes:
zooming and stretching a focal length to precisely position the camera, according to a visual distance between the AR dome camera and a target point, and a type of the AR dome camera.

It should be noted that, the gun camera, the ordinary dome camera and the AR dome camera involved in the present application all belong to a monitoring type camera. In the present application, the called algorithms for acquiring the coordinates, such as algorithms for converting GPS coordinates to PT coordinates, algorithms for converting XY coordinates to PT coordinates, and algorithms for converting PT coordinates to GPS coordinates, are known and achievable to those skilled in the art, and therefore will not be described in detail.

Therefore, according to the camera link method 100 of the present invention, any one camera can be linked with a designated camera, and it's selective to turn on the real-time video of the linked camera or position the linked camera to the linked point, depending on the type of the linked camera, so as to achieve the linking between different types of cameras. This method is simple and practicable, and the application range is wide.

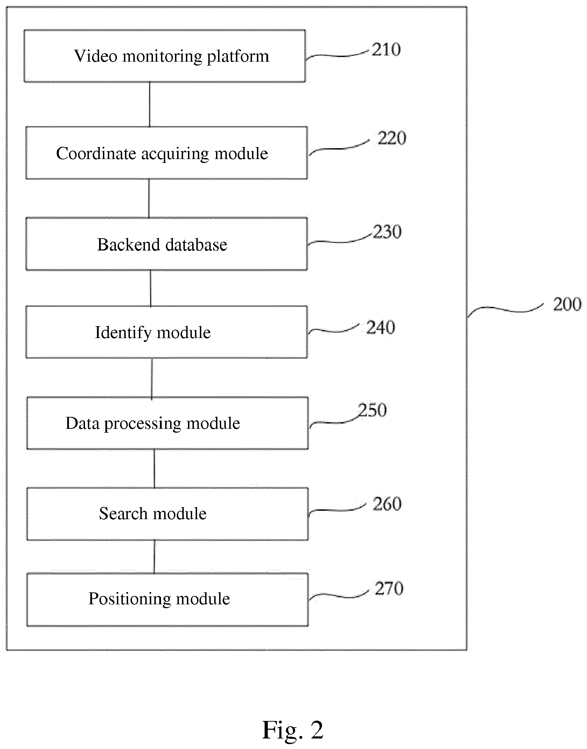

The camera link device 200 according to an embodiment of the present invention is specifically described below with reference to Fig. 2.

As shown in Fig. 2, the camera link device 200 includes a video monitoring platform 210, a coordinate acquiring module 220, a backend database 230, an identify module 240, and a data processing module 250.

Specifically, the video monitoring platform 210 is configured to acquire a real-time video of a camera; the coordinate acquiring module 220 is configured to acquire coordinates of a linked point after a point is selected as the linked point from the real-time video; the backend database 230 is configured to acquire a linked camera that is designated; the identify module 240 is configured to identify a type of the linked camera; and the data processing module 250 is configured to turn on the real-time video of the linked camera or position the linked camera to the linked point according to the type of the linked camera that is identified by the indentify module 240.

In other words, the camera link device 200 mainly consists of a video monitoring platform 210, a coordinate acquiring module 220, a backend database 230, an identify module 240, and a data processing module 250. Specifically, the video monitoring platform 210 is configured to acquire a real-time video of a camera. The camera can be any one of the cameras in the backend database 230 stored with data, or a linked camera linked by one camera. The coordinate acquiring module 220 can select a certain point in the real-time video as the linked point, and acquire the coordinates of the linked point. The information of the cameras can be pre-stored in the backend database 230, when there is a need to start up a certain camera, it's easy to process the backend database. The identify module 240 is configured to identify a type of the linked camera, so that the data processing module 250 performs corresponding operations according to different types of the linked cameras, such as directly turning on the real-time video of the linked camera or positioning the linked camera to the linked point.

Therefore, according to the camera link device 200 of the present invention, any one camera can be linked with a designated camera, and it's selective to turn on the real-time video of the linked camera or position the linked camera to the linked point, depending on the type of the linked camera, so as to achieve the linking between different types of cameras. This method is simple and practicable, and the application range is wide.

According to an embodiment of the present invention, the coordinate acquiring module 220 is configured to acquire GPS coordinates of a point of the real-time video that is clicked by a mouse.

That is to say, clicking a point at the screen of the real-time video by the mouse can acquire the GPS coordinates of this point, by means of the coordinate acquiring module 220. Such a module is simple, and the acquiring manner for the coordinates is convenient and precise.

According to some embodiments of the present invention, the coordinate acquiring module 220 includes a first acquiring module, a second acquiring module and a third acquiring module.

Specifically, the first acquiring module is configured to acquire XY coordinates of the screen of the real-time video by programs, the second acquiring module is configured to call an algorithm for converting XY coordinates to PZ coordinates and acquire the PZ coordinates, and the third acquiring module is configured to call another algorithm of converting the PT coordinates to GPS coordinates and acquire the GPS coordinates of the point that the mouse clicks. In such a way, the coordinate acquiring module 220 may quickly acquire the GPS coordinates of the point that the mouse clicks.

According to an embodiment of the present invention, the identify module 240 can identify the linked camera is a gun camera, an ordinary dome camera or an AR dome camera.

Optionally, the data processing module 250 is configured to directly turn on the real-time video of the linked camera if the linked camera is a gun camera or an ordinary dome camera; or position the linked camera to the linked point if the linked camera is an AR dome camera.

Furthermore, the data processing module 250 includes a data converting module for calling an algorithm for converting GPS coordinates that are acquired through the linked camera to PT coordinates and acquiring the PT coordinates of the linked camera, and positioning the linked camera to the linked point based on the PT coordinates, if the identify module 240 identifies the linked camera is an AR dome camera.

That is to say, the identify module 240 at least identifies the linked camera is a gun camera, an ordinary dome camera, or an AR dome camera. The data processing module 250 performs corresponding operations according to different types of the linked cameras which are identified by the identify module 240. That is, directly turning on the real-time video of the linked camera if the linked camera is a gun camera or an ordinary dome camera, so as to achieve the linking monitoring between a camera and a linked camera; or calling an algorithm for converting GPS coordinates that are acquired through the linked camera to PT coordinates and acquiring the PT coordinates of the linked camera, and positioning the linked camera to the linked point based on the PT coordinates, if the linked camera is an AR dome camera.

Therefore, the camera link device 200 of the present invention is applicable to the linking between a camera and a gun camera, or an ordinary dome camera, or an AR dome camera. Namely, one or more cameras can be linked, including ordinary gun cameras, panoramic cameras, ordinary dome cameras, or AR dome cameras.

According to an embodiment of the present invention, the camera link device 200 further includes a search module 260 for searching a surrounding camera around the linked camera, and acquiring a real-time video of the surrounding camera or positioning the surrounding camera to the linked point.

That is, according to the camera link device 200, after two cameras are linked together, the surrounding camera around the linked camera can be searched, so as to acquire the real-time video of the surrounding camera, or position the surrounding camera to the linked point.

In some embodiments of the present invention, the search module 260 searches out the surrounding camera by means of GPS coordinate automatic search algorithm.

Preferably, the search module 260 is connected to the identify module 240. After the identify module 240 identities the searched camera is a gun camera or an ordinary camera, the real-time video of the searched camera is acquired via a video monitoring platform 210. After the identify module 240 identities that the searched camera is an AR dome camera, based on the GPS coordinates acquired by the linked camera, the algorithm for converting the GPS coordinates to PT coordinates is called so as to acquire the PT coordinates, and the linked camera is positioned to the linked point.

That is, the searching process for finding the surrounding camera can be achieved by GPS coordinate automatic search algorithm. The real-time video of the surrounding camera can be acquired if the searched camera is a gun camera or an ordinary dome camera.

If the searched camera is an AR dome camera, PT coordinates of the surrounding camera can be acquired by calling algorithms, by which the surrounding camera can be positioned to the linked point.

Furthermore, the camera link device 200 includes a positioning module 270 configured to zoom and stretch a focal length to precisely position the camera, according to a visual distance between the AR dome camera and a target point, and a type of the AR dome camera.

In other words, if the linked camera is an AR dome camera, the positioning module 270 calculates the distance between the AR dome camera and the target point, and then precisely positions the AR dome camera to the target point according to the parameters of the AR dome camera.

It should be noted that, the gun camera, the ordinary dome camera and the AR dome camera involved in the present application all belong to a monitoring type camera. In the present application, the called algorithms for acquiring the coordinates, such as algorithms for converting GPS coordinates to PT coordinates, algorithms for converting XY coordinates to PT coordinates, and algorithms for converting PT coordinates to GPS coordinates, are known and achievable to those skilled in the art, and therefore will not be described in detail.

Therefore, according to the camera link device 200 of the present invention, any one camera can be linked with a designated camera, and it's selective to turn on the real-time video of the linked camera or position the linked camera to the linked point, depending on the type of the linked camera, so as to achieve the linking between different types of cameras. This method is simple and practicable, and the application range is wide.

Optionally, the video monitoring platform 210, the coordinate acquiring module 220, the identify module 240, the data processing module 250, the search module 260 are all a plurality of software function modules into which the computer program is divided, and the software function modules are stored in the memory and executed by the processor to complete the present invention. These software function modules may be a series of computer program instruction segments that are capable of performing a particular function and are used to describe the execution of the computer program in a particular device.

In addition, the present invention further provides a computer storage medium including one or more computer instructions, and the above camera link method 100 is performed when the computer instructions are run.

Namely, computer programs are stored in the computer storage medium, when the computer programs are executed by a processor, the processor performs the above camera link method 100.

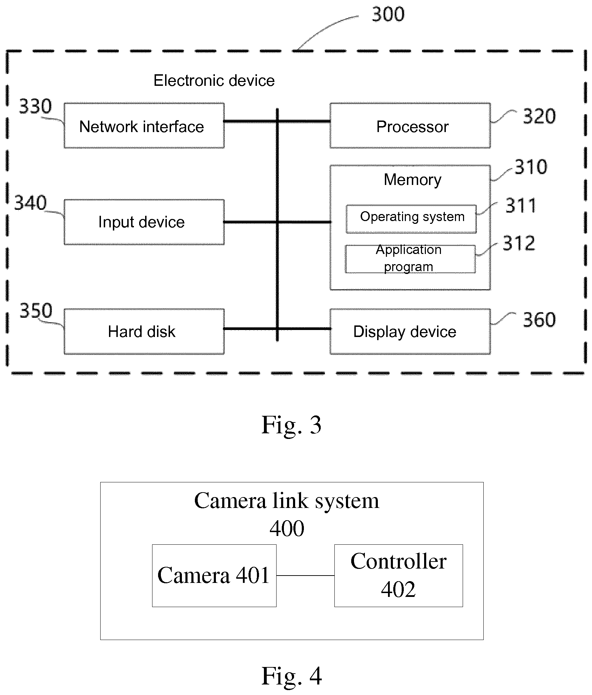

As illustrated in Fig. 3, the invention provides an electronic device 300 including a memory 310 for storing one or more computer instructions and a processor 320 for calling and executing said one or more computer instructions, thereby implanting the above method 100.

That is, the electronic device 300 includes a processor 320, a memory 310, and computer programs stored in the memory 310 and configured to be executed by the processor 320, and the method 100 is achieved when the processor 320 executes the computer programs.

Furthermore, as shown in Fig. 3, the electronic device 300 further includes a network interface 330, an input device 340, a hard disk 350 and a display device 360.

Each of the above interfaces and devices can be interconnected by bus architecture. The bus architecture can be a bus and bridge that can include any number of interconnects. One or more central processing units (CPU), represented by one or more processors 320, and various circuits of one or more memories represented by memory 310 are coupled together. The bus architecture can also connect various other circuits such as peripherals, voltage regulators, and power management circuits. It will be appreciated that the bus architecture is used to implement connection communication between these components. The bus architecture includes, in addition to the data bus, a power bus, a control bus, and a status signal bus, all of which are well known in the art and therefore will not be described in detail herein.

The network interface 330 is connected to the networks (e.g. Internet, LAN, etc.) to obtain data and store it in the hard disk 350.

The input device 340 is configured to receive various instructions input by the user and sends them to the processor 320. The input device 340 can include a keyboard or pointing devices (e.g. mouse, trackball, touch panel or touch screen).

The display device 360 is configured to display the result of the processor 320 executing the instructions.

The memory 310 is configured to store programs and data necessary for the operating system to run, and intermediate data calculated by the processor 320 in the calculation process.

It is to be understood that the memory 310 in the embodiments of the present invention may be a volatile memory or a non-volatile memory, or may include both volatile and non-volatile memory. The non-volatile memory may be a read only memory (ROM), a programmable read only memory (PROM), an erasable programmable read only memory (EPROM), an electrically erasable programmable read only memory (EEPROM), or Flash memory. Volatile memory can be random access memory (RAM), which acts as an external cache. The memory 310 of the apparatus and methods described herein is intended to comprise, without being limited to, these and any other suitable types of memory.

In some embodiments, the memory 310 stores the following elements, executable modules or data structures, or subsets thereof, or extension sets thereof: operating system 31 and programs 312.

Specifically, the operating system 311 includes various system programs, such as a framework layer, a core library layer, a driver layer, and the like, for implementing various basic services and processing hardware-based tasks. The application programs 312 include various applications, such as a browser, for implementing various application services. A program implementing the method of the embodiment of the present invention may be included in the application programs 312.

The method disclosed in the above embodiments of the present invention may be applied to the processor 320 or implemented by the processor 320. The processor 320 may be an integrated circuit chip with signal processing capabilities. In the implementation process, each step of the foregoing method may be completed by an integrated logic circuit of hardware in the processor 320 or instructions in a form of software. The processor 320 described above may be a general purpose processor, a digital signal processor (DSP), an application specific integrated circuit (ASIC), a field programmable gate array (FPGA) or other programmable logic devices, a discrete gate or transistor logic device, or discrete hardware, which can implement or execute the above methods, steps or logic blocks according to the embodiments of the present invention. The general purpose processor may be a microprocessor, or the processor, or any conventional processor or the like. The steps of the method disclosed in the embodiments of the present invention may be directly implemented by the hardware decoding processor, or may be performed by a combination of hardware and software modules in the decoding processor. The software module can be located in a conventional storage medium such as random access memory, flash memory, read only memory, programmable read only memory or electrically erasable programmable memory, registers, and the like. The storage medium is located in the memory 310, and the processor 320 reads the information in the memory 310 and completes the steps of the above method in combination with its hardware.

It will be appreciated that the embodiments described herein can be implemented in hardware, software, firmware, middleware, microcode, or a combination thereof. For hardware implementations, the processing unit can be implemented in one or more application specific integrated circuits (ASICs), digital signal processors (DSPs), digital signal processing devices (DSPDs), programmable logic devices (PLDs), field programmable gate arrays (FPGAs).), a general purpose processor, a controller, a microcontroller, a microprocessor, other electronic units for performing the functions described herein, or a combination thereof.

For software implementations, the techniques described herein can be implemented by modules (e.g. procedures, functions, and so on) that perform the functions described herein. The software code can be stored in memory and executed by the processor. The memory can be implemented in the processor or external to the processor.

Specifically, the processor 320 is further configured to read the computer programs to perform the method described in any of the above.

In the several embodiments provided in the present application, it should be understood that the disclosed method and apparatus may be implemented in other manners. For example, the device embodiments described above are merely illustrative. For example, the division of the unit is only a logical function division. In actual implementation, there may be another division manner, for example, multiple units or components may be combined or integrated into another system, or some features can be ignored or not executed. In addition, the mutual coupling or direct coupling or communication connection shown or discussed may be an indirect coupling or communication connection through some interfaces, devices or units, and may be in electrical, mechanical or other forms.

In addition, each functional unit in each embodiment of the present invention may be integrated into one processing unit, or each unit may be physically included separately, or two or more units may be integrated into one unit. The above integrated unit can be implemented in the form of hardware or in the form of combinations of hardware and software.

The above-described integrated unit implemented in the form of a software functional unit can be stored in a computer readable storage medium. The above software functional unit is stored in a storage medium and includes a plurality of instructions for causing a computer device (which may be a personal computer, a server, or a network device, etc.) to perform part of the steps of the transceiving method of the various embodiments of the present invention. The foregoing storage medium includes a U disk, a mobile hard disk, a Read-Only Memory (ROM), a Random Access Memory (RAM), a disk or an optical disk, and the like, which can store program codes.

As illustrated in Fig. 4, the present invention further includes a camera link system having several cameras 401 and controllers 402, and the controllers are configured to:
acquire a real-time video of a camera, select a point in the real-time video as a linked point and acquire coordinates of the linked point;
designate a linked camera; and
acquire a real-time video of the linked camera, turn on the real-time video of the linked camera or position the linked camera to the linked point.

While the disclosure has been described in connection with what are presently considered to be the most practical and preferable embodiments, it is to be understood that the disclosure is not to be limited to the disclosed embodiments, but on the contrary, is intended to cover various modifications and improvements included within the spirit and scope of the disclosure.

## Claims

1. A camera link method, comprising steps of:
acquiring a real-time video of a camera, selecting a point in the real-time video as a linked point and acquiring coordinates of the linked point;
designating a linked camera; and
acquiring a real-time video of the linked camera, and turning on the real-time video of the linked camera or positioning the linked camera to the linked point.

2. The camera link method according to claim 1, wherein said step of acquiring a real-time video of a camera, selecting a point in the real-time video as a linked point and acquiring coordinates of the linked point comprises:
acquiring the real-time video of the camera through a video monitoring platform;
clicking a point of the real-time video of the camera with a mouse as the linked point, and acquiring GPS coordinates of the point.

3. The camera link method according to claim 2, wherein said step of acquiring coordinates of the linked point comprises:
acquiring XY coordinates of a screen of the real-time video of the camera;
converting the XY coordinates to PT coordinates;
converting the PT coordinates to GPS coordinates and acquiring the GPS coordinates of the point that the mouse clicks.

4. The camera link method according to claim 1, further comprising:
acquiring the designated linked camera by a backend database.

5. The camera link method according to claim 1, said step of acquiring a real-time video of the linked camera, and turning on the real-time video of the linked camera or positioning the linked camera to the linked point comprises:
acquiring the real-time video of the linked camera through a video monitoring platform;
turning on the real-time video of the linked camera if the linked camera is a gun camera or a dome camera.

6. The camera link method according to claim 1, said step of acquiring a real-time video of the linked camera, turning on the real-time video of the linked camera or positioning the linked camera to the linked point comprises:
acquiring a real-time video of the linked camera through a video monitoring platform; and
acquiring GPS coordinates of the linked camera, converting the GPS coordinates to PT coordinates to acquire the PT coordinates, and positioning the linked camera to the linked point, if the linked camera is an AR dome camera.

7. The camera link method according to claim 1, further comprising a step of:
searching a surrounding camera around the linked camera, and acquiring a real-time video of the surrounding camera or positioning the surrounding camera to the linked point.

8. The camera link method according to claim 7, said step of searching a surrounding camera around the linked camera, acquiring a real-time video of the surrounding camera or positioning the surrounding camera to the linked point comprises:
automatically searching the surrounding camera around the linked camera by GPS coordinates;
acquiring the real-time video of the linked camera through the video monitoring platform, if the surrounding camera is a gun camera or an ordinary dome camera; and
acquiring GPS coordinates of the linked camera, converting the GPS coordinates to PT coordinates to acquire the PT coordinates, and positioning the linked camera to the linked point, if the linked camera is an AR dome camera.

9. The camera link method according to claim 8, further comprising:
zooming and stretching a focal length to precisely position the camera, according to a visual distance between the AR dome camera and a target point, and a type of the AR dome camera.

10. A camera link device, comprising:
a video monitoring platform, configured to acquire a real-time video of a camera;
a coordinate acquiring module, configured to acquire coordinates of a linked point after a point is selected as the linked point from the real-time video;
a backend database, configured to acquire a linked camera that is designated;
an identify module, configured to identify a type of the linked camera; and
a data processing module, configured to turn on the real-time video of the linked camera or position the linked camera to the linked point according to the type of the linked camera that is identified by the indentify module.

11. A camera link system, comprising several cameras and controllers, wherein the controllers are configured to:
acquire a real-time video of a camera, select a point in the real-time video as a linked point and acquire coordinates of the linked point;
designate a linked camera; and
acquire a real-time video of the linked camera, turn on the real-time video of the linked camera or position the linked camera to the linked point.

12. A computer storage medium, comprising one or more computer instructions, wherein the camera link method according to any one of claims 1-9 is performed when the computer instructions are run.
